(19) Europäisches Patentamt
European Patent Office
Office européen des brevets

(11) **EP 2 439 508 A1**

(12) **EUROPÄISCHE PATENTANMELDUNG**

(43) Veröffentlichungstag:
**11.04.2012 Patentblatt 2012/15**

(51) Int Cl.:
*G01L 5/16* *(2006.01)*     *G01M 17/10* *(2006.01)*

(21) Anmeldenummer: **11182115.3**

(22) Anmeldetag: **21.09.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **07.10.2010 AT 16762010**

(71) Anmelder: **PJ Messtechnik GmbH
8020 Graz (AT)**

(72) Erfinder:
• **Joch, Martin
  8045 Graz (AT)**
• **Mader, Philipp
  8051 Graz (AT)**
• **Hutterer, Helmut
  3100 St. Pölten - Wagram (AT)**

(74) Vertreter: **Schwarz & Partner
Patentanwälte
Wipplingerstraße 30
1010 Wien (AT)**

(54) **Messradsatz für Schienenfahrzeuge**

(57) Messradsatz (1) für Schienenfahrzeuge zur Erfassung von im Fahrbetrieb auftretenden Kräften (Y, Q, Tx, e), mit auf zumindest einer Radscheibe (2, 3, 5, 6, 7) des Messradsatzes (1) im Abstand verschiedener Messradien (I, II, III) angeordneten Messfühlern (R0I_a, RoI_i,...), vorzugsweise Dehnmessstreifen, die zu Wheatstoneschen Messbrücken (MB) verschaltet werden und von denen Brückensignale (BS) an einen Rechner (4) des Messradsatzes (1), zur Lösung einer Anzahl von N linear unabhängigen Gleichungen zur Ermittlung der auf den Messradsatz (1) einwirkenden Kräfte (Y, Q, Tx, e), zuführbar sind, wobei zumindest drei, um jeweils 60° und ganzzahlige Teilungen/Vielfache davon versetzte Messfühler (R0I_a, T60I_a, S120I_a,...) je Messradius (I, II, III) angeordnet sind, und dass der Rechner (4) zum Gleichrichten der Brückensignale (BS) je Messradius (I, II, III) ausgebildet ist und dabei anerkannte mathematische Verfahren aus der Elektrotechnik zum Einsatz kommen.

FIG.4

**Beschreibung**

Die Erfindung betrifft einen Messradsatz für Schienenfahrzeuge zur Erfassung von im Fahrbetrieb auftretenden Kräften, mit auf zumindest einer Radscheibe des Messradsatzes im Abstand verschiedener Messradien angeordneten Messfühlern, vorzugsweise Dehnmessstreifen, zum Abgeben von Messsignalen, und mit Wheatstoneschen Messbrücken, denen die Messsignale zuführbar sind und von denen Brückensignale an einen Rechner des Messradsatzes, zur Lösung einer Anzahl von N linear unabhängigen Gleichungen zur Ermittlung der auf den Messradsatz einwirkenden Kräfte, zuführbar sind.

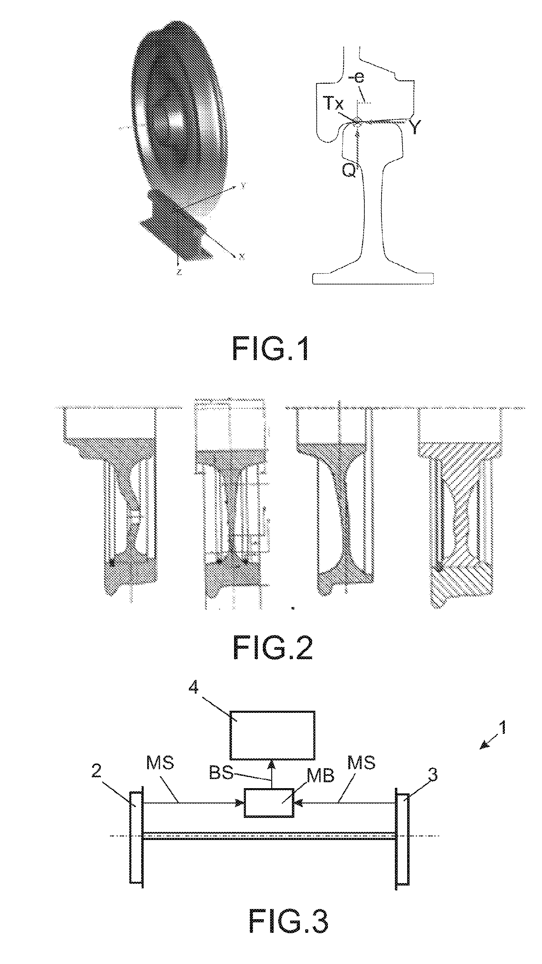

Das Dokument DE 10 2005 051 498 B3 offenbart so einen Messradsatz zur Erfassung von Kräften und der Lage des Kontaktpunktes zwischen einem Rad eines Schienenfahrzeuges und der Schiene. Insbesondere dient der beschriebene Messradsatz zur Bestimmung der folgenden in Figur 1 dargestellten Kräfte: Q (Kraft in z-Richtung), Y (Kraft in y-Richtung) und Tx (Kraft in x-Richtung) sowie des Abstandes des Kontaktpunktes e zwischen Rad und Schiene vom Radrücken als auch von der Rotationsachse der Radscheibe. Durch die Ermittlung dieser Kräfte können Angaben zur Entgleisungssicherheit und zur Gleisbeanspruchung eines neuen Radsatzes gemacht werden.

Bei dem bekannten Messradsatz werden auf drei Messradien Messfühler auf vier unterschiedlichen Winkelteilungen angeordnet, die je um 45° zueinander verdreht angeordnet sind. Die Messfühler sind zu Wheatstonschen Messbrücken zusammengeschlossen, wobei je Messbrücke zwei unabhängige Informationen bzw. Gleichungen erhalten werden, um die vorstehend angegebenen Kräfte zu ermitteln. Die unterschiedliche Gewichtung der einzelnen Einflüsse wird durch Koeffizienten k1 bis k12 berücksichtigt, die bei einer Kalibrierung ermittelt werden, bei der definiert Kräfte aus definierten Richtungen in den Radsatz eingeleitet werden.

Bei dem bekannten Messradsatz hat sich als Nachteil erwiesen, dass die Messergebnisse winkelabhängig sind bzw. von dem jeweiligen Drehwinkel des Rades abhängen. Weiters ist der bekannte Messradsatz nur zur Berechung der Kräfte auf den in dem Ausführungsbeispiel des Dokumentes offenbarten Messradsatz mit einer doppelten Kröpfung als Radscheibenform verwendbar, was eine wesentliche Einschränkung darstellt, da neue Radsätze mit anderen Radscheibenformen nicht vermessen werden können. In Figur 2 sind beispielhaft einige unterschiedliche Radscheibenformen von Radsätzen dargestellt.

Als besonderer Nachteil des bekannten Messradsatzes hat sich aber erwiesen, dass gängige Kalibriervorrichtungen für Messradsätze nur Einzelsensorsignale betrachten und hierdurch, die erst durch die Verrechnung der verschiedenen Messsignale entstehenden Oberwellen höherer Ordnung nicht berücksichtigt werden, was zu Messfehlern führt. Diesem Umstand wird in Verfahren nach dem Stand der Technik dadurch begegnet, dass die Signaloberwellen durch Tiefpassfilter mit einer Grenzfrequenz von 20 bis 30Hz geglättet werden. Die Erfassung von höher dynamischen Vorgängen, wie beispielsweise Weichenherzauffahrten, Schienenstöße etc., ist somit nicht oder nur eingeschränkt möglich. Ein weiterer Nachteil des bekannten Messradsatzes ist, dass die Kalibrierung nur bis 20 kN erfolgt. Da der Messbereich des Messradsatzes jedoch um eine Zehnerpotenz höher ist, werden die Ergebnisse dieser Kalibrierung extrapoliert. Dieses Vorgehen ist nur bei einem vollständig linearen Verhalten zulässig, was jedoch bei einem Messradsatz nicht immer der Fall ist.

Bei dem bekannten Messradsatz wird zur Unterdrückung von nicht Mittelwert freien Oberwellen eine spezielle Form der Kalibrierung angewendet. Das mit Oberwellen behaftete Messsignal hat bei einer, von der Ordnung der Oberwelle abhängigen Winkelstellung des Rades einen Nulldurchgang, bezogen auf das Sollsignal (Welle 1. Ordnung). Gemäß dem Stand der Technik wird das Rad bei dieser Winkelstellung kalibriert. Die so ermittelten Kalibrierfaktoren bzw. Koeffizienten zum Verrechnen des Messsignals gelten jedoch nur für Nulldurchgänge der Oberwellen. Somit kann das Messsignal nur bei Winkelstellungen, wo dies auftritt, richtig berechnet werden. Signalanteile, bei denen dies nicht auftritt, werden so aufgrund der Oberwellen falsch berechnet. Stand der Technik ist, diesen Fehler durch nachträgliches Tiefpassfiltern des Ergebnisses zu korrigieren. Die Oberwellen werden durch diese Filterung eliminiert, jedoch ist wiederum keine hochdynamische Messung möglich.

Der Erfindung liegt die Aufgabe zugrunde einen Messradsatz für Schienenfahrzeuge zu schaffen, bei dem die vorstehend angegebenen Nachteile vermieden sind.

Erfindungsgemäß wird diese Aufgabestellung dadurch gelöst, dass zumindest drei, um jeweils 60° und ganzzahlige Teilungen/Vielfache davon versetzte Messfühler je Messradius angeordnet sind, und dass der Rechner zum Gleichgerichten der Brückensignale je Messradius ausgebildet ist.

Hierdurch ist der Vorteil erhalten, dass die Gesetzmäßigkeiten aus dem Fachgebiet der Elektrotechnik/Elektronik angewendet werden können. Hierbei werden die einzelnen Messsignale der Wheatstoneschen Messbrücken bzw. Vollbrücken so miteinander verrechnet, dass das Ergebnis der Verrechnung der Messsignale einer zusammengehörigen Gruppe, eine ausreichende Unterdrückung von Oberwellen als auch des Einflusses von Fliehkräften, sowie der Verschiebung des Mittelwerts von Brückenausgangssignalen (Drift) zur Folge hat.

Die Berechnung der gesuchten Kräfte erfolgt mit Hilfe eines Systems von einander linear unabhängigen Gleichungen. Die Koeffizienten dieses Gleichungssystems werden bei der Kalibrierung des Messradsatzes ermittelt. Sollte dieses Ergebnis bei Plausibilitätskontrollen unzulässige Abweichungen aufweisen, so wird mit Hilfe eines Iterationsverfahrens die Lösung des Gleichungssystems verbessert. Dieses Iterationsverfahren verwendet bei der Kalibrierung des Radsatzes ermittelte Koeffizienten-Sätze, aus denen die für die Lösung des Gleichungssystems jeweils am besten passenden Koeffizienten entnommen werden. Dies ermöglicht bei der Berechnung der Kräfte die Berücksichtigung der Verlagerung des Berührpunktes des Kraftangriffes.

Besonders vorteilhaft bei dem Messradsatz ist, dass die Kenntnis des Drehwinkels für das hier beschriebene Verfahren nicht erforderlich ist. Das beschriebene Messverfahren ist im Gegensatz zum Stand der Technik auch bei einem nicht rotierenden Messradsatz funktionsfähig. Bei dem Messverfahren werden die technisch relevanten Oberwellenanteile in den einzelnen Brückensignalen ohne Ermittlung bzw. Kenntnis des Drehwinkels im Bezug zum ortsfesten Koordinatensystem komplett eliminiert bzw. stark bedämpft. Durch die erfindungsgemäße mathematische Lösung der Signalverrechnung aus den umlaufenden Brückensignalen sowie über entsprechende Konfiguration der Wheatstoneschen Messbrücken und Zusammenfassung von Brückensignalen zu Gruppen in Abhängigkeit der jeweiligen Radscheibenform gelingt es, in dem erfindungsgemäßen Messverfahren den Störsignalanteil aus den mit Oberwellen behafteten Eingangssignalen im Pegel des Ausgangssignals auf typischerweise kleiner 0,5 % für die Messgrößen Y und Q zu unterdrücken. Dadurch wird, gegenüber dem im Stand der Technik angewandten Verfahren, eine praktisch fehlerfreie Bestimmung der erforderlichen Parameter einerseits bei nicht rotierendem Radsatz (stillstehendem Fahrzeug) ermöglicht, andererseits bei Berücksichtigung der Schwingungseigenformen der jeweiligen Radscheiben eine Erhöhung der Dynamisierung der erfassten Parameter ermöglicht.

Weitere vorteilhafte Ausgestaltungen des erfindungsgemäßen Systems werden im Folgenden anhand der Figuren näher erläutert.

Figur 1 zeigt das Rad eines Schienenfahrzeuges samt zugehörigem Koordinatensystem für die Ermittlung der auf das Rad und die Schiene einwirkenden Kräfte.
Figur 2 zeigt unterschiedliche Radscheibenformen.
Figur 3 zeigt einen Messradsatz.
Figur 4 zeigt eine Radscheibe des Messradsatzes mit Messfühlern gemäß einem ersten Ausführungsbeispiel der Erfindung.
Figur 5 zeigt Wheatstonsche Messbrücken des Messradsatzes gemäß dem ersten Ausführungsbeispiel der Erfindung.
Figur 6 zeigt die Brückensignale der Wheatstonschen Messbrücken gemäß Figur 5.
Figur 7 zeigt die gleichgerichteten Brückensignale gemäß Figur 6.
Figur 8 zeigt eine Radscheibe des Messradsatzes mit Messfühlern gemäß einem zweiten Ausführungsbeispiel der Erfindung.
Figur 9 zeigt Wheatstonsche Messbrücken des Messradsatzes gemäß dem zweiten Ausführungsbeispiel der Erfindung.
Figur 10 zeigt die Brückensignale der Wheatstonschen Messbrücken gemäß Figur 9.
Figur 11 zeigt die gleichgerichteten Brückensignale gemäß Figur 10.
Figur 12 zeigt eine Radscheibe des Messradsatzes mit Messfühlern gemäß einem dritten Ausführungsbeispiel der Erfindung.
Figur 13 zeigt Wheatstonsche Messbrücken des Messradsatzes gemäß dem dritten Ausführungsbeispiel der Erfindung.
Figur 14 zeigt im Rechner des Messradsatzes durchgeführte Schritte zur Lösung der linear unabhängigen Gleichungen.

Figur 3 zeigt einen Messradsatz 1 für Schienenfahrzeuge zur Erfassung von im Fahrbetrieb auftretenden Kräften. Insbesondere dient der Messradsatz 1 zur Bestimmung der in Figur 1 dargestellten Kräfte: Q (Kraft in z-Richtung), Y (Kraft in y-Richtung) und Tx (Kraft in x-Richtung) sowie des Abstandes des Kontaktpunktes e zwischen Rad und Schiene vom Radrücken als auch von der Rotationsachse der Radscheibe. Durch die Ermittlung dieser Kräfte können Angaben zur Entgleisungssicherheit und zur Gleisbeanspruchung eines neuen Radsatzes gemacht werden.

Der Messradsatz 1 weist zwei Radscheiben 2 und 3 auf, an denen im Abstand verschiedener Messradien Messfühler angeordnet sind, die durch Dehnmessstreifen (DMS) gebildet sind. Die DMS sind zu Wheatstonschen Messbrücken MB verschaltet, die im Bereich der Messtechnik allgemein bekannt sind. Von den Messbrücken werden Brückensignale BS an einen Rechner 4 abgegeben, der unter Berücksichtigung der Brückensignale BS und anderer Eingangsparameter zur Lösung von einer Anzahl von N linear unabhängigen Gleichungen ausgebildet ist, um die vorstehend angegebenen Kräfte auf eine stehende oder im Fahrbetrieb rotierende Radscheibe 2 und 3 zu ermitteln. Im Folgenden werden drei Ausführungsbeispiele der Erfindung näher erläutert.

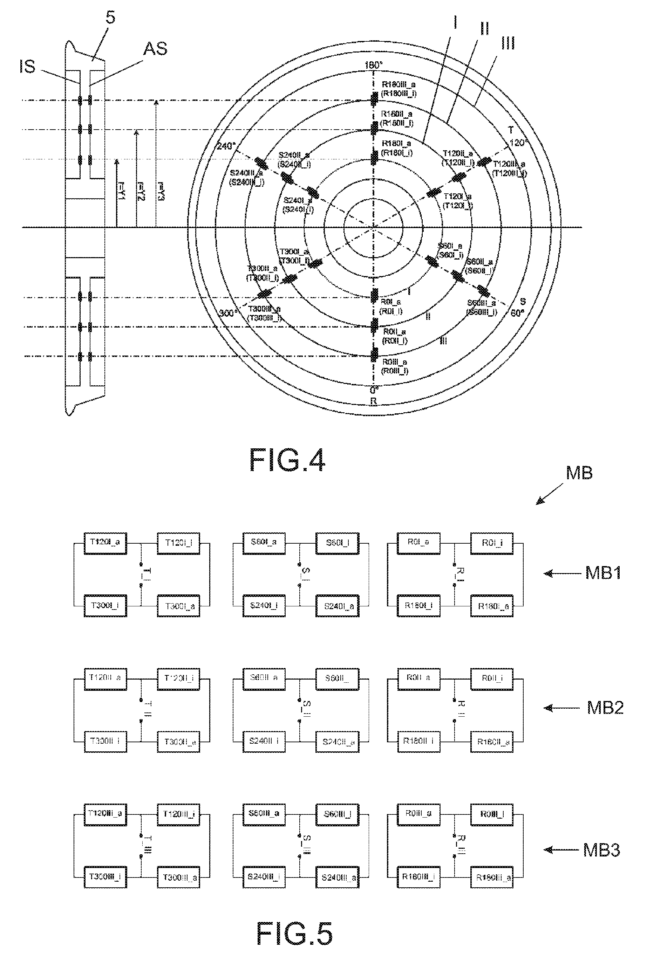

In Figur 4 ist eine Radscheibe 5 eines Messradsatzes gemäß einem ersten Ausführungsbeispiel der Erfindung dargestellt. Die Radscheibe 5 weist eine Innenseite IS und eine Außenseite AS auf. Auf der Radscheibe 5 sind auf einem ersten Messradius I, der einen Radius Y1 aufweist, auf der Innenseite IS sechs Messfühler R0I_i, S60I_i, T120I_i, R180I_i, S240I_i und T300I_i auf drei Winkelteilungen beziehungsweise Durchmessern R, S und T der Radscheibe 5 angeordnet, die jeweils 60° zueinander verdreht angeordnet sind. Weitere sechs Messfühler R0I_a, S60I_a, T120I_a, R180I_a, S240I_a und T300I_a sind den vorstehenden Messfühlern gegenüberliegend auf der Außenseite AS der Radscheibe 5 angeordnet. Ebenso sind zwölf weitere Messfühler auf einem zweiten Messradius II und zwölf weitere Messfühler auf einem dritten Messradius III der Radscheibe 5 angeordnet.

In der Figur 5 sind neun Wheatstonsche Messbrücken MB dargestellt. Jeweils vier der insgesamt 36 DMS der Radscheibe 5 werden zu einer Wheatstonschen Messbrücke verschaltet. Hierbei sind mit den oberen drei Messbrücken MB1 jeweils die Messfühler der drei Durchmesser R, S und T des ersten Messradiusses I zu einer Gruppe zusammengeschaltet, wobei von diesen drei Messbrücken MB1 drei Brückensignale R_I, S_I und T_I an den Rechner 4 abgegeben werden. Weitere drei Brückensignale R_II, S_II und T_II werden von den drei Messbrücken MB2 abgegeben, zu denen die Messfühler des zweiten Messradiusses II miteinander verschaltet sind. Zusätzliche drei Brückensignale R_III, S_III und T_III werden von den drei Messbrücken MB3 abgegeben, zu denen die Messfühler des dritten Messradiusses III miteinander verschaltet sind.

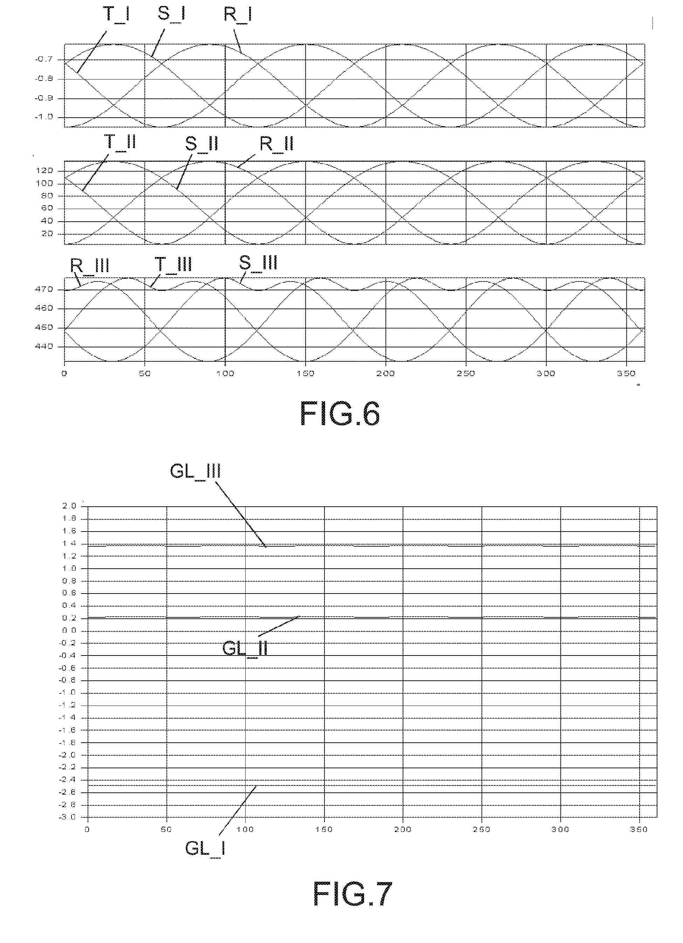

In der Figur 6 sind die vorstehend angegebenen neuen Brückensignale beziehungsweise Umlaufbiegesignale dargestellt, wenn auf die Radscheibe 5 eine reine Kraft in Y-Richtung aufgebracht wird. Auf der Abszisse ist die Winkelposition der Radscheibe 5 bei einer vollen Umdrehung der Radscheibe 5 und auf der Ordinate das jeweilige Brückensignal (in $10^3$ µm/m bei der obersten Abbildung, in µm/m bei der mittleren und untersten) dargestellt. Die oberste Abbildung zeigt die drei Brückensignale R_I, S_I und T_I des ersten Messradiusses I, die mittlere Abbildung zeigt die drei Brückensignale R_II, S_II und T_II des zweiten Messradiusses II und die unterste Abbildung der Figur 6 zeigt die drei Brückensignale R_III, S_III und T_III des dritten Messradiusses III. Auffällig an diesen Brückesignalen ist, dass die Brückensignale des ersten Messradiusses I und zweiten Messradiusses II rein sinus-förmig sind, die Brückensignale R_III, S_III und T_III des dritten Messradiusses III einen anderen Verlauf haben. Der Grund dafür sind die Art der Verschaltung, die Position der applizierten DMS und der Dehnungsverlauf an der Radscheibe bei einer Aufgebrachten Kraft. Auf Grund dieser Randbedingungen können die Brückensignale Formen aufweisen, die Sinusförmig sind bzw. können die Signale auch stark vom Sinus abweichen

In Figur 7 sind die von dem Rechner 4 gleichgerichteten Brückensignale GL_I, GL_II und GL_III der drei Messradien dargestellt. In dem Rechner 4 sind unterschiedliche Formeln zur Gleichrichtung der Brückensignale vorgesehen, wobei die Wahl der geeigneten Formel von unterschiedlichen Einflussfaktoren (z.B. Radscheibenform, Messfühleranordnung, Signalform...) abhängig ist. Gemäß dem ersten Ausführungsbeispiel werden die Brückensignale gemäß folgender Formel in dem Rechner 4 gleichgerichtet:

$$GL\_I = R\_I + S\_I + T\_I$$

$$GL\_II = R\_II + S\_II + T\_II$$

$$GL\_III = R\_III + S\_III + T\_III$$

Die Gleichrichtung erfolgt somit mit einer im Fachgebiet der Elektrotechnik bekannten Formel, die hier zur Gleichrichtung des Informationsgehalts mechanischer Biegespannungen ausgenutzt wird. Wie anhand von Figur 7 ersichtlich, weisen alle drei gleichgerichteten Brückensignale unabhängig von der Winkelposition des Radsatzes 5 einen gleichmäßigen Wert auf. Anzumerken ist, dass durch die beschriebene Art der Gleichrichtung auch Signale, die sehr vom Sinus abweichen (wie die Brückensignale des dritten Messradiusses III) ohne große Welligkeit gleichgerichtet werden können. Diese Werte der gleichgerichteten Brückensignale werden von dem Rechner 4 zur Lösung der linear unabhängigen Gleichungen verwendet.

Wie bereist anhand des vorstehenden ersten Ausführungsbeispiels ersichtlich, ist die weitere Berechung in dem Rechner 4 und somit auch das ermittelte Ergebnis unabhängig von der Winkelposition des Radsatzes 5. Hierdurch ist der Vorteil erhalten, dass auch am sich nicht drehenden, also still stehenden, Radsatz 5 Kräfte aufgebracht werden können und diese ohne Verringerung der Mess- oder Rechengenauigkeit zur Kontrolle berechnet werden können. In einem nachfolgend beschriebenen Kalibrier- und Iterationsverfahren können die Koeffizienten der linear unabhängigen Gleichungen derart verfeinert werden, dass eine besonders genaue Messung der im Fahrbetrieb mit dem Messradsatz 1 auftretenden Kräfte erfolgen kann.

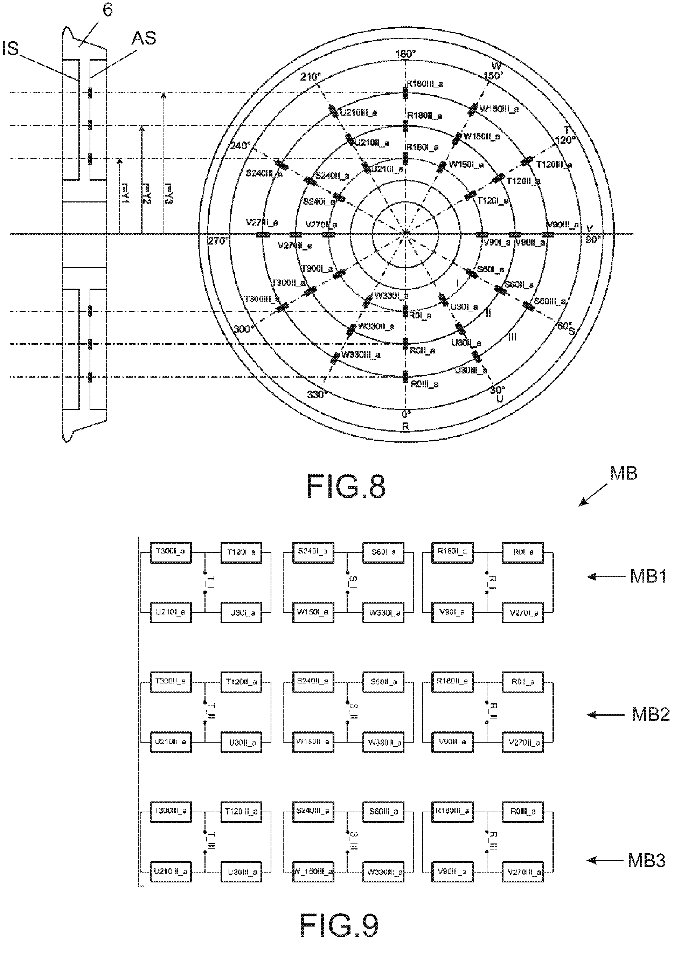

In Figur 8 ist eine Radscheibe 6 eines Messradsatzes gemäß einem zweiten Ausführungsbeispiel der Erfindung dargestellt. Gemäß diesem Ausführungsbeispiel sind nur an der Außenseite AS der Radscheibe 6 Messfühler angebracht, wobei aber auf weiteren drei Durchmessern U, V und W zusätzliche 18 Messfühler angebracht sind. Je nach Anordnung der Messfühler kann der Messradsatz zur besonders feinfühligen und somit genauen Messung von Zug-, Druck- oder Biegespannungen optimiert werden. Die Anordnung aller Messfühler auf nur einer Seite hat Vorteile in Bezug auf den Applikatonsaufwand, ebenso muss keine Bohrung in der Radscheibe vorgesehen werden, um die Verkabelung von der Radinnenseite zur Radaußenseite zu führen. Die einseitige Verschaltung ist aber nicht bei allen Radscheiben möglich, ebenso ist damit nicht immer eine ausreichende Unterdrückung der Oberwellen möglich. Ein Abwägen der Vor- und Nachteile zur Auswahl der Applikationsmethode ist unbedingt von Nöten

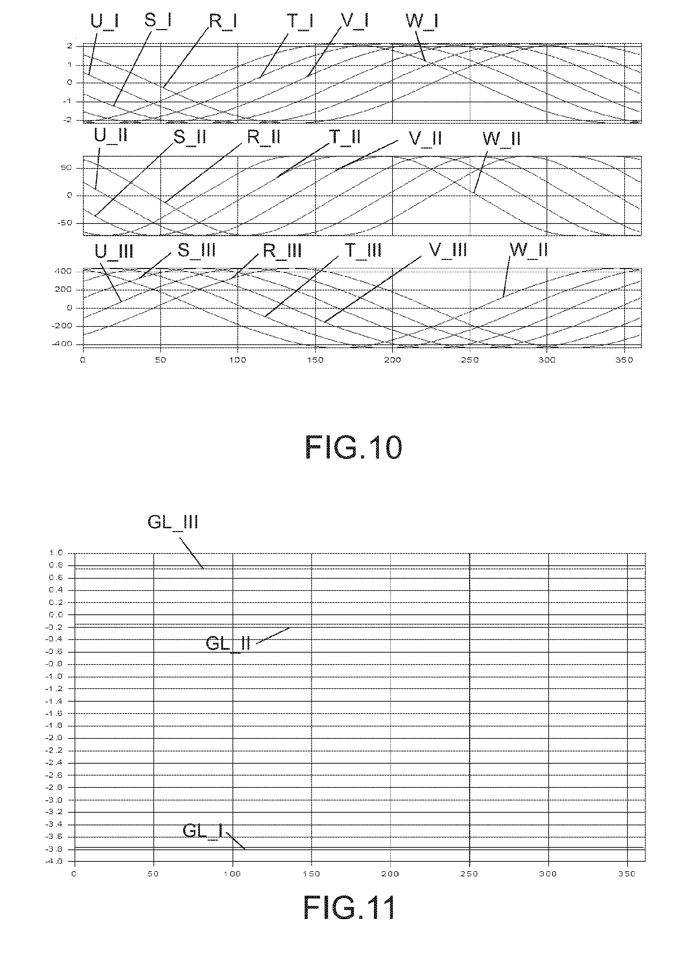

In Figur 9 sind die Wheatstonschen Messbrücken MB der drei Messradien I, II und III dargestellt und in Figur 10 die sich von diesen Messbrücken ergebenden neun Brückensignale. Für diese Art der Anordnung hat sich die Gleichrichtung mit Hilfe folgender Gleichung als besonders vorteilhaft erwiesen:

$$GL\_I = \sqrt{R\_I^2 + S\_I^2 + T\_I^2 + U\_I^2 + V\_I^2 + W\_I^2}$$

$$GL\_II = \sqrt{R\_II^2 + S\_II^2 + T\_II^2 + U\_II^2 + V\_II^2 + W\_II^2}$$

$$GL\_III = \sqrt{R\_III^2 + S\_III^2 + T\_III^2 + U\_III^2 + V\_III^2 + W\_III^2}$$

Dies ist ebenfalls eine aus dem Fachgebiet der Elektrotechnik bekannte Formel, die hier zur Gleichrichtung des Informationsgehalts mechanischer Biegespannungen ausgenutzt wird. Wie anhand von Figur 11 ersichtlich, sind die sich ergebenden gleichgerichteten Brückensignale unabhängig von der Winkelposition des Radsatzes 6. Hierdurch ergeben sich eine Vielzahl an Vorteilen.

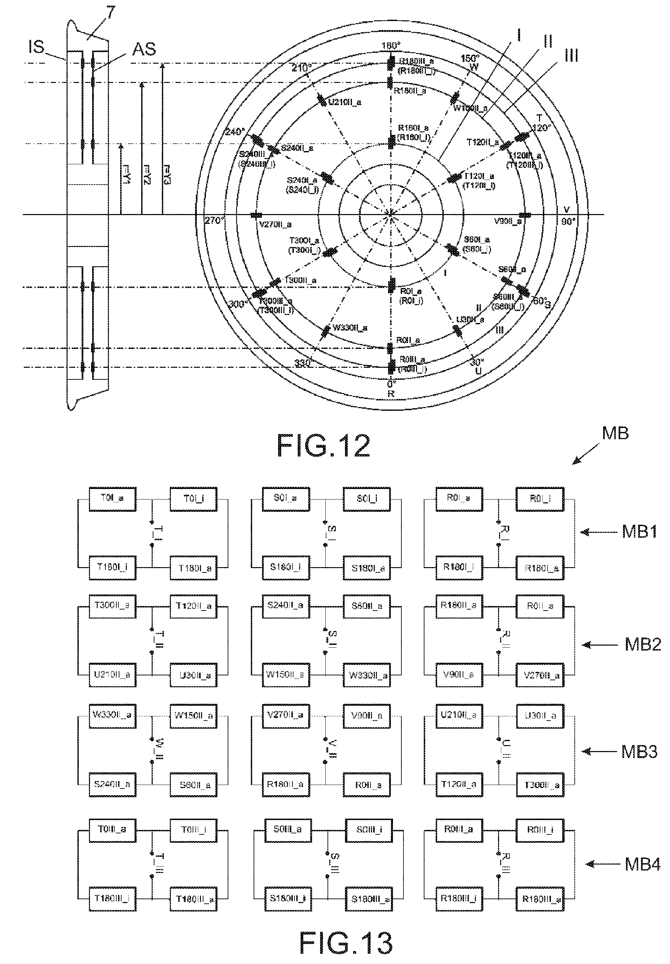

Um die Vielfalt an Möglichkeiten erfindungsgemäßer Messradsätze anzudeuten, ist in den Figuren 12 und 13 ein Messradsatz 7 gemäß einem dritten Ausführungsbeispiel dargestellt. Bei dem Messradsatz 7 sind die Messradien I, II und III nicht gleichmäßig verteilt und auf dem Messradius II sind nur an der Außenseite AS Messfühler angeordnet. Im Allgemeinen sind die Messradien nicht gleichmäßig auf der Radscheibe verteilt, sondern die Positionen der Messradien sind abhängig vom Verlauf der Radialdehnungen auf der Radscheibe. Zur Auswertung der Messsignale MS der Messfühler werden vier Gruppen von Messbrücken MB gebildet, wobei für den zweiten Messradius II in insgesamt sechs Messbrücken für jeden der Durchmesser R, S, T, U, V und W ein eigenes Brückensignal ermittelt wird. Im Allgemeinen ist diese Methodik das Optimum aus Applikationsaufwand und optimaler Unterdrückung der Welligkeit der gleichgerichteten Signale.

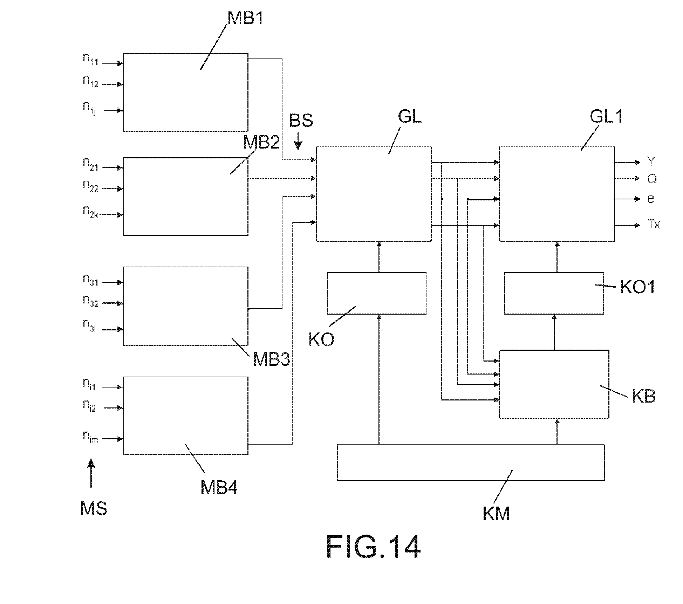

Anhand von Figur 14 sind nunmehr die Schritte zur Lösung der linear unabhängigen Gleichungen näher erläutert. Die Dehnmessstreifen DMS werden zu Wheatstonschen Messbrücken MB1 bis MB4 verschaltet (in Figur 14 als $n_{11}$ bis $n_{im}$ angegeben). Die Signale der Wheatstonschen Messbrücken werden in den Blöcken GL gleichgerichtet, um einen winkelunabhängigen Wert der Brückensignale zu erhalten.

Die Anwendung von Gleichungen aus der Elektrotechnik für die Verarbeitung von Biegespannungen geht auf die Erkenntnis zurück, dass die gemessenen Signale der Voll- oder Halbbrücken, die von Natur aus auch einen sinusförmigen Verlauf aufweisen, als die Phasen eines Drehstromnetzes betrachtet werden können. Angewendet werden können alle Ansätze der ungesteuerten Gleichrichtung aus dem Bereich der Drehstromtechnik: Bei ungesteuerten Gleichrichtern erfolgt der Umschaltvorgang ohne eine zusätzliche Steuerelektronik nur aufgrund der anliegenden elektrischen Spannungen (Potentialdifferenz) an den Dioden. Dabei wird die Eigenschaft von Dioden ausgenutzt, elektrischen Strom nur in einer Richtung fließen zu lassen. Bei erfindungsgemäßen Messradsätzen und Messverfahren werden keine Dioden zum Gleichrichten der Signale verwendet. Die Gleichrichtung erfolgt über mathematische Formeln und Bool'scher Algebra, um die Funktionsweiser der Dioden mathematisch abzubilden.

Für diese Betrachtung müssen nur folgende Bedingungen erfüllt sein:

1. Die Signale müssen sinusförmig sein.
2. Die Amplituden aller Signale, die sich auf einem Radius befinden (bei gleich großer eingebrachter Kraft) müssen gleich groß sein.
3. Die Phasendifferenz aller Phasen muss konstant sein.

Bedingung 2 wird auf jeden Fall erfüllt, Abweichungen können nur durch unterschiedliche K-Faktoren der Dehnmessstreifen, Ungenauigkeiten bei der Applikation und Bauteiltoleranzen hervorgerufen werden. Diese Einflussfaktoren sind entweder vernachlässigbar gering, oder können durch einen Korrekturfaktor der aus der Kalibrierung des Messradsatzes stammt, angepasst werden.

Bedingung 3 wird auch in jedem Fall erfüllt, da die Phasenlage der einzelnen Signale durch die Position der applizierten Voll- oder Halbbrücken bestimmt wird.

Bedingung 1 ist der Kernpunkt des erfindungsgemäßen Messradsatzes. Abhängig von Oberwellengehalt der verwendeten Signale sind die Eingangssignale mehr oder weniger deformierte Sinussignale. So können die Brückensignale, abhängig von Applikationsposition, Verschaltungsmethode und Kombination der aufgebrachten Kräfte/Messgrößen Y, Q und e Trapezform oder Dreieckform aufweisen. Dadurch weist das gleichgerichtete Signal einen hohen Anteil von Oberwellen auf, die das Messergebnis verfälschen. Dieser Problematik wird mittels folgenden Ansätzen entgegengewirkt:

- Auswahl von geeigneten Applikationspositionen der Messfühler zur Erhaltung eines sinusförmigen Signals.
- Auswahl von geeigneten Verschaltungsmethoden (Messfühler in Messbrücken zu Viertel-, Halb- bzw. Vollbrücken) zur Erhaltung eines sinusförmigen Signals.
- Verrechnen von mehr als drei Phasen zur Gleichrichtung des Signals.
- Auswahl einer geeigneten Methode aus dem Bereich der Drehstromtechnik, um die Brückensignale gleichzurichten.

Basierend auf diesen Erkenntnissen ist eine optimale Auswahl der Position der Messfühler und der Verschaltung der von diesen abgegeben Messsignalen in Messbrücken möglich.

Der Rechner ist nunmehr weites zur Durchführung einer Kalibriermessung zur Ermittlung der Koeffizienten der linear unabhängigen Gleichungen ausgebildet, wobei anhand von drei unterschiedlichen Kalibrierfällen mit vorgegebenen Kräften auf den Messradsatz ein Koeffizienten-Satz ermittelt wird. Hierfür findet in einem Block KM die Kalibrierung des Messradsatzes und mit dieser die Ermittlung der Koeffizienten in einem Block KO für die Berechung der unabhängigen Gleichungen im Block GL statt. Die drei gleichrichteten Brückensignale GL_I, GL_II und GL_III werden mittels folgender Formeln zur Ermittlung der vorläufigen Y, Q und e Werte der Kräfte ausgewertet:

$$Y\_erg = A * GL\_I \quad + \quad B * GL\_II \quad + \quad C * GL\_III \qquad \text{Formel 1}$$

$$Q\_erg = D * GL\_I \quad + \quad E * GL\_II \quad + \quad F * GL\_III \qquad \text{Formel 2}$$

$$e\_erg \ = G * GL\_I \quad + \quad H * GL\_II \quad + \quad I * GL\_III \qquad \text{Formel 3}$$

GL_I, GL_II, GL_III Gleichgerichtete Brückensignale der drei Messradien I, II, III
A, B...I Koeffizienten aus Kalibrierung zum Gleichungslösen

Die Koeffizienten A bis I werden aus drei fest vorgegebenen Kalibrierfällen bestimmt (die Art der Kalibrierfälle ist abhängig von Radscheibenform, Verschaltungsmethode und Einsatzgebiet des Messradsatzes).

<div style="text-align:center">

Kalibrierfall 1: Y = 0 kN     Q = 100 kN     e = 0 mm
Kalibrierfall 2: Y = 100 kN     Q = 0 kN     e = 0 mm
Kalibrierfall 3: Y = 100 kN     Q = 100 kN     e = 20 mm

</div>

So ergeben sich mit Formel 1 bis 3 vorläufige Ergebnisse für Y, Q und e wie z.B.:

Y_erg = 10 kN
Q_erg = 50 kN
e_erg = 5 mm

Die Genauigkeit dieser Berechnungsergebnisse wird bei einem Iterationsschritt verbessert. Die Koeffizienten A bis I werden in einem Block KB aus drei neuen Kalibrierfällen bestimmt. Die Kalibrierfälle werden aufgrund der Ergebnisse aus 1) ausgewählt wie z.B.:

<div style="text-align:center">

Kalibrierfall 1: Y = 0 kN     Q = 60 kN     e = 0 mm
Kalibrierfall 2: Y = 10 kN     Q = 50 kN     e = 5 mm

</div>

(fortgesetzt)

Kalibrierfall 3: Y = 5 kN    Q = 70 kN    e = 10 mm

Die Werte der Kräfte Y,Q und e der ausgewählten Kalibrierfälle sind im Bereich der in 1) berechneten Werte von Y_erg, Q_erg und e_erg und von einem linearen Zusammenhang kann ausgegangen werden. Aus diesen Kalibrierfällen werden dann wieder die Koeffizienten A' bis I' in einem Block KO1 bestimmt und das Gleichungssystem in einem Block GL1 nach folgender Gleichung gelöst:

$$Y\_erg2 = A' * GL\_I + \quad B' * GL\_II \quad + \quad C' * GL\_III \qquad \text{Formel 4}$$

$$Q\_erg2 = D' * GL\_I + \quad E' * GL\_II \quad + \quad F' * GL\_III \qquad \text{Formel 5}$$

$$e\_erg2 = G' * GL\_I + \quad H' * GL\_II \quad + \quad I',* GL\_III \qquad \text{Formel 6}$$

Y_erg2, Q_erg2, e_erg2 sind dann die Ergebnisse. Gegebenenfalls kann Schritt 2 auch wiederholt werden, wenn zu erwarten ist, dass sich das Ergebnis verbessert. Unter Verwendung der auf diese Weise ermittelten Koeffizienten können mit dem erfindungsgemäßen Messradsatz 1 die auf die Radscheiben 2 und 3 und die Schienen im normalen Fahrbetrieb einwirkenden Kräfte gemessen werden.

Es kann erwähnt werden, dass die erfindungsgemäße Gleichrichtung der Brückensignale durchführbar ist, wenn die Messfühler auf Durchmessern des Radsatzes angeordnet sind, die um folgende Winkel verdreht angeordnet sind: 60° und ganzzahlige Teilungen/Vielfache davon.

Es kann erwähnt werden, dass auch beliebige andere oder für den Einzelfall angepasste Kalibrierfälle vorgegeben werden könnten.

**Patentansprüche**

1. Messradsatz (1) für Schienenfahrzeuge zur Erfassung von im Fahrbetrieb auftretenden Kräften (Y, Q, Tx, e), mit auf zumindest einer Radscheibe (2, 3, 5, 6, 7) des Messradsatzes (1) im Abstand verschiedener Messradien (I, II, III) angeordneten Messfühlern (R0I_a, R0I_i,...), vorzugsweise Dehnmessstreifen, zum Abgeben von Messsignalen (MS), und mit Wheatstoneschen Messbrücken (MB), denen die Messsignale (MS) zuführbar sind und von denen Brückensignale (BS) an einen Rechner (4) des Messradsatzes (1), zur Lösung einer Anzahl von N linear unabhängigen Gleichungen zur Ermittlung der auf den Messradsatz (1) einwirkenden Kräfte (Y, Q, Tx, e), zuführbar sind, **dadurch gekennzeichnet, dass**
zumindest sechs, um jeweils 60° und ganzzahlige Teilungen davon versetzte Messfühler (R0I_a, T60I_a, S120I_a,...) je Messradius (I, II, III) angeordnet sind, und dass der Rechner (4) zum Gleichrichten der Brückensignale (BS) je Messradius (I, II, III) ausgebildet ist.

2. Messradsatz (1) gemäß Anspruch 1, **dadurch gekennzeichnet, dass** die Gleichrichtung der Brückensignale (BS) mit den folgenden Formeln erfolgt:

$$GL\_I = R\_I + S\_I + T\_I$$

$$GL\_II = R\_II + S\_II + T\_II$$

$$GL\_III = R\_III + S\_III + T\_III$$

wobei die Messfühler (R0I_a, R0I_i,...) auf den Messradien I, II und III auf den Durchmessern R, S und T angeordnet sind und wobei die Durchmesser (R, S, T) um je 60° zueinander verdreht angeordnet sind.

7

3. Messradsatz (1) gemäß Anspruch 1, **dadurch gekennzeichnet, dass** die Gleichrichtung der Brückensignale (BS) mit den folgenden Formel erfolgt:

$$GL\_I = \sqrt{R\_I^2 + S\_I^2 + T\_I^2 + X\_I^2 + Y\_I^2 + Z\_I^2}$$

$$GL\_II = \sqrt{R\_II^2 + S\_II^2 + T\_II^2 + X\_II^2 + Y\_II^2 + Z\_II^2}$$

$$GL\_III = \sqrt{R\_III^2 + S\_III^2 + T\_III^2 + X\_III^2 + Y\_III^2 + Z\_III^2}$$

wobei die Messfühler (R0I_a, R0I_i,...) auf den Messradien I, II und III auf den Durchmessern R, S, T, X, Y und Z angeordnet sind und wobei die Durchmesser (R, S, T, X, Y, Z) um jeweils 30° zueinander verdreht angeordnet sind.

4. Messradsatz (1) gemäß einem der vorherigen Ansprüche, **dadurch gekennzeichnet, dass** der Rechner (4) zur Durchführung einer Kalibriermessung zur Ermittlung der Koeffizienten (A, B, ...I) der linear unabhängigen Gleichungen ausgebildet ist, wobei anhand von zumindest drei unterschiedlichen Kalibrierfällen mit vorgegebenen Kräften (Y, Q, e) auf den Messradsatz (1) zumindest zwei unterschiedliche Koeffizienten-Sätze (A, B,...I, A', B', ... I') ermittelt werden.

5. Messradsatz (1) gemäß Anspruch 4, **dadurch gekennzeichnet, dass** der Rechner (4) zur Durchführung eines Iterationsverfahrens ausgebildet ist, bei dem die ermittelten Koeffizienten-Sätzen (A, B,...I, A', B', ... I') in die N linear unabhängigen Gleichungen eingesetzt werden und anhand der hierbei errechneten Kräfte (Y_erg, Q_erg, e_erg) im Hinblick auf die bei dem jeweiligen Kalibrierfall tatsächlich vorgegebenen Kräfte (Y, Q, e) neue Kalibrierfälle mit anderen vorgegebenen Kräften festgelegt werden, um erneut verbesserte Koeffizienten-Sätze für die Berechnung der auf den Messradsatz (1) einwirkenden Kräfte (Y, Q, e) zu ermitteln.

6. Messradsatz (1) gemäß einem der vorherigen Ansprüche, **dadurch gekennzeichnet, dass** der Rechner (4) dazu ausgebildet ist je nach Radscheibenform des Messradsatzes (1) Brückensignale (BS) einzelner Wheatstonscher Messbrücken (MB) für die Lösung der N linear unabhängigen Gleichungen zu Gruppen (MB1, MB2, MB3, MB4) zusammenzuziehen.

7. Messverfahren für Schienenfahrzeuge zur Erfassung von im Fahrbetrieb auftretenden Kräften (Y, Q, e), wobei folgende Verfahrensschritte durchgeführt werden:

Messen von Messsignalen (MS) mit Messfühlern (R0I_a, R0I_i,...), die auf zumindest einer Radscheibe (2, 3, 5, 6, 7) eines Messradsatzes (1) des Schienenfahrzeugs im Abstand verschiedener Messradien (I, II, III) angeordnet sind;
Verschalten von Dehnmessstreifen zu Wheatstonschen Messbrücken (MB), von denen Brückensignale (BS) abgegeben werden;
Lösen einer Anzahl von N linear unabhängigen Gleichungen, um die auf den Messradsatz (1) einwirkenden Kräfte (Y, Q, e) zu ermitteln, **dadurch gekennzeichnet, dass** die Messsignale (MS) von zumindest sechs Messfühlern (R0I_a, R0I_i,...) gemessen werden, die je um jeweils 60° und ganzzahligen Teilungen davon versetzt auf den Messradien (I, II, III) angeordnet sind;
Gleichrichten der Brückensignale (BS) je Messradius (I, II, III), wobei zum Lösen der Gleichungen die gleichgerichteten Brückensignale GL_I, GL_II, GL_III) verwendet werden.

FIG.1

FIG.2

FIG.3

FIG.4

FIG.5

FIG.6

FIG.7

FIG.8

FIG.9

FIG.10

FIG.11

FIG.12

FIG.13

14

FIG.14

EP 2 439 508 A1

Europäisches Patentamt
European Patent Office
Office européen des brevets

# EUROPÄISCHER RECHERCHENBERICHT

Nummer der Anmeldung

EP 11 18 2115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | DE 10 2005 051498 B3 (DEUTSCHE BAHN AG [DE]) 26. April 2007 (2007-04-26) * das ganze Dokument * ----- | 1-7 | INV. G01L5/16 G01M17/10 |
| Y | EP 2 180 303 A2 (CULEK BOHUMIL [CZ]; MALINSKY JIRI [CZ]) 28. April 2010 (2010-04-28) * Zusammenfassung; Abbildungen * * Absätze [0001], [0003], [0006], [0008], [0012], [0016], [0017], [0036], [0037], [0039], [0041] - [0042] * ----- | 1-7 | |
| Y | ES 2 334 529 A1 (CONSTRUCCIONES Y AUX DE FERROC [ES]; CT DE INVESTIGACIONES TECN DE CON) 11. März 2010 (2010-03-11) * Abbildungen * ----- | 1-7 | |
| A | DE 42 18 929 C1 (DEUTSCHE BUNDESBAHN) 9. September 1993 (1993-09-09) * das ganze Dokument * ----- | 1-7 | |
| | | | RECHERCHIERTE SACHGEBIETE (IPC) G01M G01L G01B |

Der vorliegende Recherchenbericht wurde für alle Patentansprüche erstellt

| Recherchenort | Abschlußdatum der Recherche | Prüfer |
|---|---|---|
| Den Haag | 23. Januar 2012 | Stavroulis, Stefanos |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

16

**ANHANG ZUM EUROPÄISCHEN RECHERCHENBERICHT**
**ÜBER DIE EUROPÄISCHE PATENTANMELDUNG NR.**

EP 11 18 2115

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2012

| Im Recherchenbericht angeführtes Patentdokument | Datum der Veröffentlichung | Mitglied(er) der Patentfamilie | Datum der Veröffentlichung |
|---|---|---|---|
| DE 102005051498 B3 | 26-04-2007 | DE 102005051498 B3<br>EP 1780524 A2 | 26-04-2007<br>02-05-2007 |
| EP 2180303 A2 | 28-04-2010 | KEINE | |
| ES 2334529 A1 | 11-03-2010 | KEINE | |
| DE 4218929 C1 | 09-09-1993 | AT 143133 T<br>DE 4218929 C1<br>EP 0580969 A1 | 15-10-1996<br>09-09-1993<br>02-02-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005051498 B3